# EUROPEAN PATENT SPECIFICATION

(11) **EP 2 466 182 B1**
(45) Date of publication and mention of the grant of the patent: **26.02.2014**
(21) Application number: 11171788.0
(22) Date of filing: 28.06.2011
(51) Int. Cl.: F16L 17/06, F16L 39/00

(54) **Fluid connector alignment process**
Verfahren zur Ausrichtung von Flüssigkeitsverbinder
Procédé d'alignement de connecteurs de fluides

(30) Priority: 14.12.2010 EP 10194960
(43) Date of publication of application: 20.06.2012
(73) Proprietor: Caterpillar Work Tools B. V., 5232 BJ 's-Hertogenbosch (NL)
(72) Inventor: Luyendijk, Dirk Jacobus, 5473 RE HEESWIJK-DINTHER (NL); Van Amelsfoort, Eduard Cornelis Maria Henricus Christianus, 5017 CG TILBURG (NL); Jongebloed, Holger, 26389 WILHELMSHAVEN (DE)
(74) Representative: Modiano, Micaela Nadia

(56) References cited:
- BE-A- 434 043
- US-A- 1 117 762
- US-A- 3 195 930
- US-A- 4 709 726
- US-B1- 6 305 720

## Description

### Technical Field

This disclosure relates to a process for alignment of male and female fluidconnectors for engagement of these components, in particular a process which allows for a displacement between the male and female fluidconnectors.

### Background

Conventional male and female fluidconnectors may be used to sealingly join pressurised fluid lines. When engaged, the corresponding fluidconnectors may automatically enable the fluid and/or fluid pressure to be transmitted, through a mutual passageway formed at engagement. These corresponding fluidconnectors may reliably maintain high fluid pressure after repeated engagement and disengagement operations.

The corresponding fluidconnectors may need to be suitably aligned before their engagement. Alignment of the fluidconnectors may be necessary in order to establish a reliable and leak free connection. Proper alignment of the corresponding connectors prior to engagement may also increase the service life of the components.

A fluidconnector may have to be aligned with high accuracy to avoid excessive wear of the internal components which may eventually result in a leaking connection. When fluidconnectors are coupled in an automated environment, the final alignment of the fluidconnectors during the engagement process may be critical since the connecting force may often be much higher compared to a manual connect system. Hence, any misalignment in combination with the high connecting force may cause a deterioration of the fluidconnectors.

A cause for fluidconnector misalignment may be changes in temperature. A significant temperature difference may be present between a fluidconnector and a corresponding fluid connector. The corresponding fluidconnectors may be mounted in a worktool or a quickcoupler. As a result of thermal material expansion, the fluidconnectors may no longer be aligned properly. For example, a warm quickcoupler may be connected to a cold worktool which may result in the corresponding fluidconnectors being misaligned.A series of fluidconnectors may be mounted in a mounting plate to ensure simultaneous engagement of the fluidconnectors for different hydraulic functions. Such a mounting plate may be used on either one or on both of a coupling and plug side of the fluidconnector configuration. As a result of stacked-up tolerances, the positions of corresponding fluidconnectors may be slightly misaligned.

This misalignment may not be avoided without very accurate machining of the fluidconnectors, at very high cost. Further, any misalignment may not be compensated until the fluidconnectors start to engage.

US6305720 discloses an articulating connector system including an active connector coupled to a first line and a hub assembly coupled to a second line. The active connector includes a swivel coupling element intermediate a grip and a ball nose to allow rotational and articulating motion. A seal is coupled to the ball nose and is protected and guided by an alignment lip into mating engagement with a sealing surface defined by the hub. A clamp closes about the swivel coupling element and hub to draw together the seal and sealing surface into sealing contact to connect the first line to the second line.

The present disclosure is directed, at least in part, to improving or overcoming one or more aspects of the prior art alignment process for the engagement of corresponding fluidconnectors.

### Brief Summary of the Invention

In a first aspect, the present disclosure describes a process of aligning of a fluidconnector and a corresponding fluidconnector may comprise the steps of aligning a first fluid coupler supporting a first connector member to a second fluid coupler supporting a second connector member; moving the second connector member towards the first connector member after the engagement of a guiding pin provided on the first fluid coupler and a guiding bushing provided on the second fluid coupler; and engaging the first connector member to the second connector member to connect the fluidconnectors wherein the first connector member is displaceable relative to the second connector member.

### Brief Description of the Drawings

The foregoing and other features and advantages of the present disclosure will be more fully understood from the following description of various embodiments, when read together with the accompanying drawings, in which:
Fig. 1 is an isometric view of a fluid coupler according to an embodiment of the present disclosure;
Fig. 2 is a bottom view of a corresponding coupler according to an embodiment of the present disclosure;
Figs. 3a - 3c are sectional views of a guiding pin and a bushing in the fluid coupler and the corresponding coupler at various stages of engagement according to an embodiment of the present disclosure;
Fig. 4 is a cross-sectional view of the fluid coupler according to an embodiment of the present disclosure; and
Fig. 5 is a cross-sectional view of the fluid coupler of Fig. 4 and the corresponding fluid coupler prior to engagement according to an embodiment of the present disclosure.

### Detailed Description

This disclosure generally relates to the alignment of male and female fluidconnectors, supported in respective couplers, for engagement of these components and in particular an engagement which compensates for a misalignment between the male and female fluidconnectors.

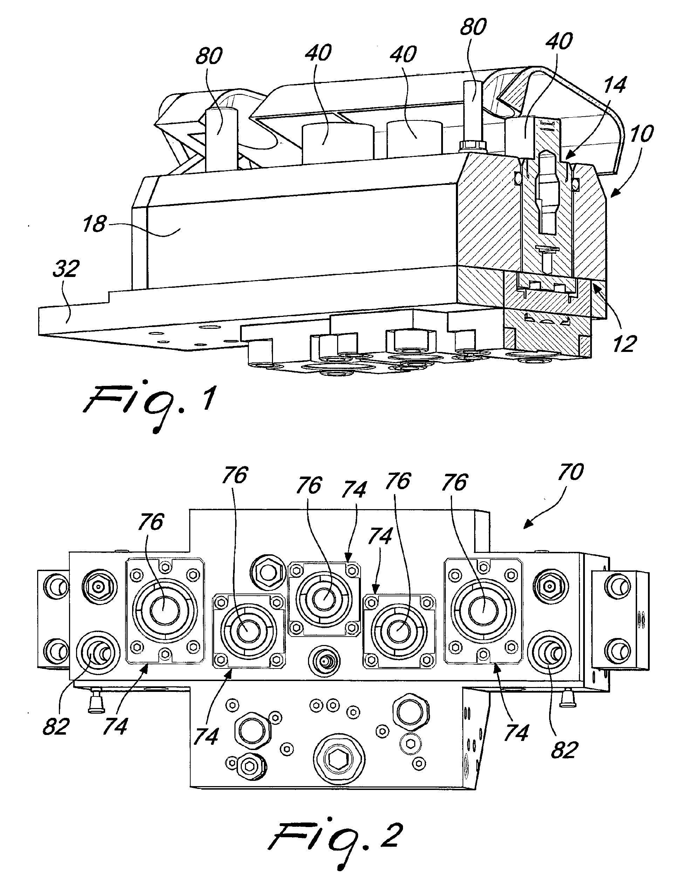

Fig. 1 illustrates a first fluid coupler **10** which may comprise a support member **12,** a plurality of first connector members **14.** The first fluid coupler **10** may further comprise guiding pins **80.** In an embodiment, the first fluid coupler 10 may be mounted in a mounting bracket for engagement to a second fluid coupler **70.**

Fig. 2 illustrates the second fluid coupler **70** which may have a corresponding cartridge **72** and a plurality of second fluidconnector members **74** and a plurality of corresponding fluidconnectors **76.** The second fluid coupler **70** may further comprise guiding bushings **82.** In an embodiment, the second fluid coupler 70 may be mounted in a quick coupler for engagement to the first fluid coupler **10.**

A process of aligning of a fluidconnector **40** and a corresponding fluidconnector **76** may comprise aligning a first fluid coupler **10** supporting a first connector member **14** to a second fluid coupler **70** supporting a second connector member **74;** moving the second connector member **74** towards the first connector member **14** after the engagement of a guiding pin **80** provided on the first fluid coupler **10** and a guiding bushing **82** provided on the second fluid coupler 70; and engaging the first connector member **14** to the second connector member **74** to connect the fluidconnectors **40,** 76 wherein the first connector member **14** is displaceable relative to the second connector member **74.**

A process of aligning of a fluidconnector **40** and a corresponding fluidconnector **76** may comprise aligning a first fluid coupler **10** supporting a first connector member **14** to a second fluid coupler **70** supporting a second connector member **74;** moving the second connector member **74** towards the first connector member **14** after the engagement of a guiding pin **80** provided on the first fluid coupler **10** and a guiding bushing **82** provided on the second fluid coupler **70;** and displacing the first connector member **14** relative to the second connector member **74** at engagement of the first connector member **14** to the second connector member **74.**

The first fluid coupler 10 may be mounted in a mounting bracket and the second fluid coupler 70 may be mounted in a quick coupler for reciprocal engagement. There may be an intial alignment between the quickcoupler and mounting bracket.

After alignment, a locking member, which may be a wedge cylinder, may be actuated to be unlocked. The quickcoupler body may then move relative to the mounting bracket. In an embodiment, the quickcoupler may be rotated so as to be positioned between the hingeplates of the mounting bracket. The rotation may continue until movement is blocked due to contact between hingeplates and quickcoupler body.

In an embodiment, the second fluid coupler **70** may be rotated the relative to the first fluid coupler 10 for mutual alignment.

In an embodiment, the quickcoupler having the second fluid coupler **70** mounted therein may be rotated relative to the mounting bracket having the first fluid coupler **10** mounted therein for alignment of the second fluid coupler **70** and the first fluid coupler **10.**

The process may comprise a step of locking the first fluid coupler **10** in a position relative to the position of the second fluid coupler **70** prior to the engagement of the guiding pin **80** and the guiding bushing **82.**

In an embodiment, the mounting bracket having the first fluid coupler **10** mounted therein may be locked to the quickcoupler having the second fluid coupler **70** mounted therein prior to the engagement of the guiding pin **80** and the guiding bushing **82.**

The quickcoupler and mounting bracket may be held in position relative to each other by the locking member after being suitably positioned. The guiding pins **80** on the first fluid coupler 10 may be aligned with the guiding bushing **82** in the second fluid coupler **70,** after the connection between quickcoupler and mounting bracket. A corresponding mounting plate **84** with the second connector members **74** may subsequently move towards the first connector members **14** for engagement between the guiding pins **80** and the guiding bushing **82.**

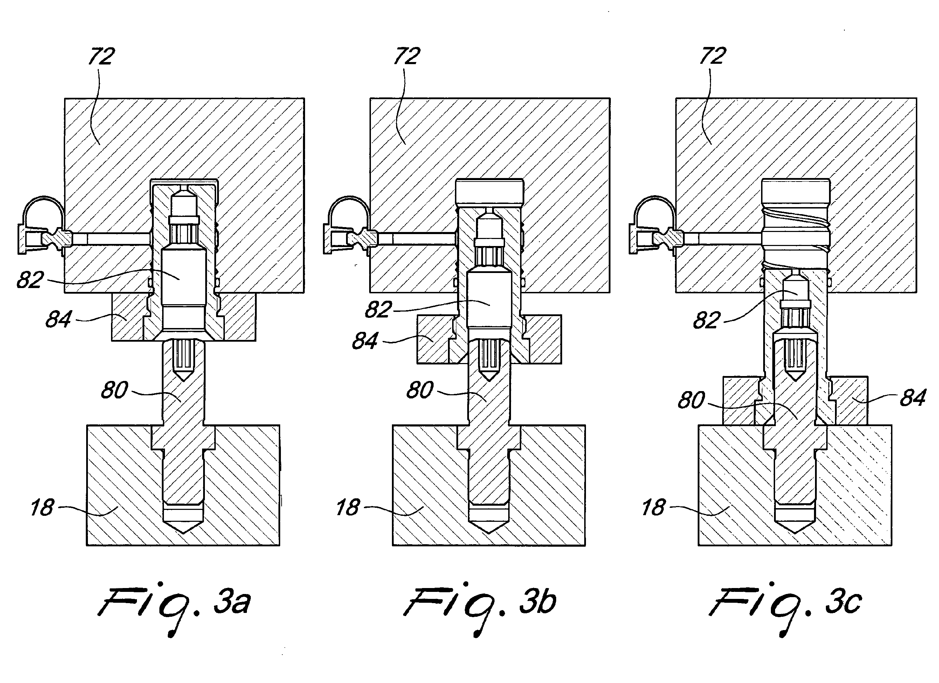

Figs. 3a - 3c illustrate the guiding pin **80** of the first fluid coupler 10 and the guiding bushing 82 of the second fluid coupler **70** at various stages of engagement.

In Fig. 3a, the guiding pin **80** and guiding bushing **82** may be initially aligned when the first fluid coupler 10 is mounted in a mounting bracket and the second fluid coupler **70** is mounted in a quick coupler and moved into a suitable position. This initial alignment may not be sufficient for the alignment and connection of the fluid connectors **40, 76.**

In Fig. 3b, the guiding pin **80** and guiding bushing **82** may initiate engagement by movement of the guiding bushing **82** towards the guiding pin **80.** The fluid connectors **40, 76** may not be connected at this stage. The engagement of guiding pin **80** and guiding bushing **82** may align the fluid connectors **40, 76** for their mutual connection.

In Fig. 3c, the guiding pin **80** and guiding bushing **82** may be engaged.

After engagement of the guiding pins **80** and the guiding bushing **82** the engagement of the first and second connector member **14, 74** may commence for connection of fluid connectors **40,76.**

In an embodiment, first and second connector member **14, 74** may be engaged and the fluid connectors **40, 76** may be connected after engagement of the guiding pin **80** and guiding bushing **82.**

During engagement of the first connector member **14** to the second connector member **74,** the first connector member **14** may be displaceable relative to the second connector member **74.**

The first connector member **14** may be radially and/or pivotably displaced. The radial and/or pivotal displacement of the first connector member **14** may allow for a smooth and efficient engagement of the first connector member **14** to the second connector member **74.**

In an embodiment, during engagement of the first connector member **14** to the second connector member **74,** the piston member **16** may also be pivotally displaced. The piston member **16** may be pivotally displaced in unison with a pivotal displacement of the first connector member **14.** The pivotal displacement of the piston member **16** may allow for the thrust surface **49** of the first connector member **14** to remain in parallel with the piston thrust surface **54.**

The engagement of first connector member **14** to the second connector member **74,** according to the present disclosure, may involve pressurising a fluid circuit to axially slide a piston member **16** in the support member **12.**

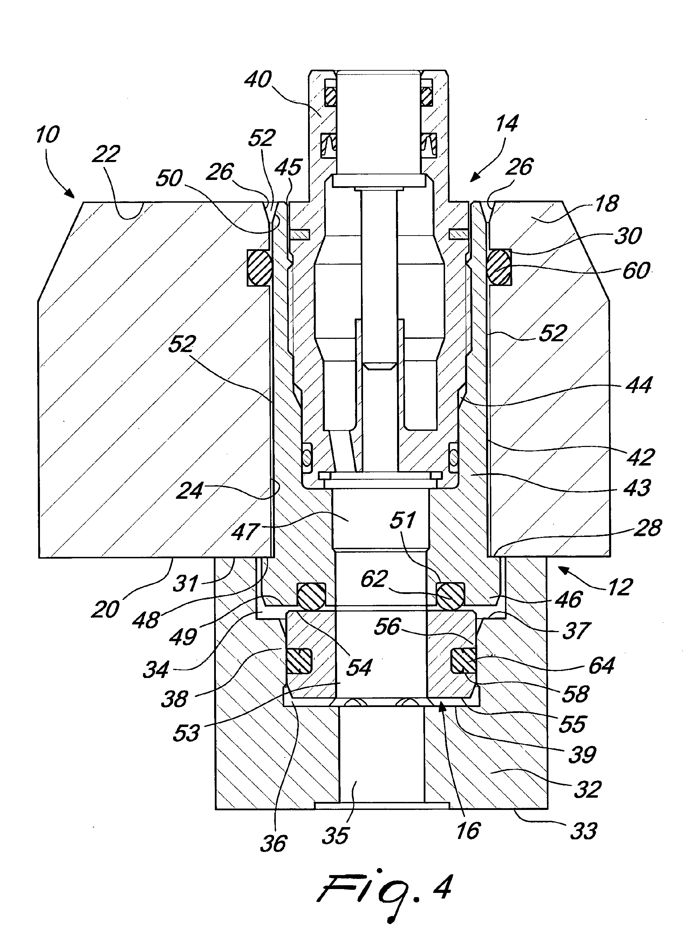

During aligned engagement of the first connector member **14** to the second connector member **74** the fluid coupler is not under fluid pressure. After the engagement of the first connector member **14** to the second connector member **74** the fluid circuit is pressurised. With reference to Fig. 4, the pressurised fluid may flow into a fluid chamber **36** through a fluid passage **35** provided in a mounting plate **32** of the support member **12.**

The flow of pressurised fluid pushes the piston member **16** to slide axially in a guide **38.** The piston member **16** may be forced by the pressurised fluid into pushing contact with the first connector member **14.** The piston member **16** pushing on the first connector member **14** may compress a thrust seal **62** disposed between the piston member **16** and the first connector member **14.** The first connector member **14** may be pushed into abutting engagement with a cartridge **18** of the support member **12.** In this abutting engagement, the first connector member **14** may not be radially and/ or pivotably displaced. The first connector member **14** may be stably held against the cartridge **18** through the force of the pressurised fluid.

Prior to disengagement, the fluid circuit is depressurised which may allow the first connector member **14** to be radially and/ or pivotably displaced. Subsequently, the first connector member **14** and the second connector member **74** may be disengaged. The compressible element **60** may return the first connector member **14** to a neutral position after disengagement from the second connector member **74.**

Fig. 4 illustrates the first fluid coupler **10** with the support member **12,** the first connector member **14** and the piston member **16.** The first connector member **14** may be housed in the support member **12.** The piston member 16 may be axially slidable in the support member **12.**

In an embodiment, the support member **12** may comprise the cartridge **18** and the mounting plate **32.** The cartridge **18** and the mounting plate **32** may be mutually connected. The cartridge **18** may be rigidly mounted to the mounting plate **32.**

The cartridge **18** may have a configuration for engaging the mounting plate **32** and for accommodating the first connector member **14.** The cartridge **18** may be formed as a block and may have a first cartridge side **20** and a second cartridge side **22.** The first cartridge side **20** and the second cartridge side **22** may be parallel. The first cartridge side **20** may be in contact with a surface of the mounting plate **32** when cartridge **18** and mounting plate **32** may be mutually connected. The second cartridge side **22** may engage to a surface of a corresponding mounting plate of a corresponding coupler.

The cartridge **18** may include a channel **24.** The channel **24** may be annular and may extend through cartridge **18.** The channel **24** may have openings on the first cartridge side 20 and the second cartridge side **22.** The longitudinal axis of the channel **24** may be perpendicular to the first cartridge side **20** and the second cartridge side **22.** In the first fluid coupler **10,** the first connector member **14** may be substantially or completely accommodated within the channel **24.**

The edge of the opening of channel **24** at the second cartridge side **22** may be inclined away from the longitudinal axis of the channel **24** to form an inclined edge **26.** The inclined edge **26** may encircle the opening of the channel **24** at the second cartridge side **22.**

In an embodiment, the cartridge **18** may comprise a groove **30.** The groove **30** may be cut into the cartridge **18.** The groove **30** may be positioned at channel **24** such that a side opens to channel **24.** The groove **30** may be concentric with channel **24** and may be positioned at any point along the channel **24.** In an embodiment, the groove **30** may be positioned adjacent the opening of the channel **24** at the second cartridge side **22.** In an embodiment, the groove **30** may be positioned adjacent the inclined edge **26.**

In an embodiment, the cartridge **18** may comprise a plurality of grooves **30** at channel **24** such that each groove has a side that opens to channel **24.**

The opening of the channel **24** at first cartridge side **20** may have an abutment edge **28.** The abutment edge **28** may be configured to engage the first connector member **14.** The abutment edge **28** may be orthogonal to the longitudinal axis of the channel **24.** In an embodiment the abutment edge **28** may encircle the opening of channel **24** at first cartridge side **20.** In an alternative embodiment, abutment edge **28** may be disposed from the opening of channel **24** and within the channel **24.**

The mounting plate **32** may be configured for engaging the cartridge **18** and for accommodating the first connector member **14.** The mounting plate **32** may be formed as a block and may have a first plate side **31** and a second plate side **33.** The first plate side **31** and the second plate side **33** may be parallel. In the first fluid coupler 10, the first plate side **31** may contact the first cartridge side **20** of the cartridge **18.**

The mounting plate **32** may include a through cavity which may be formed by an abutment chamber **34,** a fluid chamber **36** and the fluid passage **35.** The cavity may have openings on the first plate side **31** and the second plate side **33.** The abutment chamber **34** may have an opening at the first plate side 31. The fluid passage **35** may have an opening at the second plate side **33.** The opening of the abutment chamber **34,** at the first plate side **31,** may be greater than the opening of the fluid passage **35,** at the second plate side **33.**

In an embodiment, each of the abutment chamber **34,** the fluid chamber **36** and the fluid passage 35 may have an annular geometry. The diameter of the abutment chamber **34** may be greater than the diameter of the fluid chamber **36** and diameter of the fluid passage **35.** The diameter of the fluid chamber **36** may be greater than diameter of the fluid passage **35.**

The longitudinal axis of the cavity may be perpendicular to the first plate side **31** and the second plate side **33.** The longitudinal axis of the cavity may be continuous with the longitudinal axis of the channel **24** when the cartridge **18** is mounted to the mounting plate **32** to form a common longitudinal axis in the support member **12.**

In the assembled support member **12,** the abutment edge **28** may extend over the opening of the abutment chamber **34.** The abutment edge **28** may be substantially perpendicular to the enclosing wall of the abutment chamber **34.**

An abutment ledge **37** may extend from the enclosing wall of the abutment chamber **34,** substantially transverse to the longitudinal axis of the cavity of the mounting plate **32,** into the cavity of the mounting plate **32.** In the assembled support member **12,** abutment ledge **37** may be opposite and substantially parallel to the abutment edge **28.**

The enclosing wall of the fluid chamber **36** may extend further into the cavity of the mounting plate **32** than the enclosing wall of the abutment chamber **34.** A piston guide **38** may be formed on the enclosing wall of the fluid chamber **36.** The piston guide **38** may be a protrusion into the fluid chamber **36.** The piston guide **38** may be a convex protrusion with a flattened apex.

In an embodiment, the piston guide **38** may be formed as a continuous ring on the enclosing wall of the fluid chamber **36** and may have a raised central portion and sloping sides inclined away from the longitudinal axis of the cavity in the mounting plate **32.** The apex of the central raised portion of the piston guide **38** may be flattened.

A fluid chamber ledge **39** may extend from the enclosing wall of the fluid chamber **36,** substantially transverse to the longitudinal axis of the cavity in the mounting plate **32,** into the cavity of the mounting plate **32.** The fluid chamber ledge **39** may be substantially parallel to the abutment ledge **37.** The enclosing wall of the fluid passage **35** may extend further into the cavity in the mounting plate **32** than the enclosing wall of the fluid chamber **36.**

In the assembled support member **12,** the abutment chamber **34** and channel **24** may be contiguous to mutually house the first connector member **14.**

The first connector member **14** may comprise a fluidconnector **40** and a fluidconnector sleeve **42.** The fluidconnector sleeve **42** may be configured to receive fluidconnector **40.**

The fluidconnector sleeve **42** may comprise a body portion **43** having a central axis. The body portion **43** may include a compartment **44** which may be configured to receive and rigidly hold fluidconnector **40.**

The compartment **44** may have an inlet **45** at an end. The fluidconnector **40** may be inserted into the compartment **44** and extracted from the compartment through the inlet **45.** The fluidconnector **40** may be assembled into the first fluid coupler **10** and disassembled from the first fluid coupler **10** without removing the fluidconnector sleeve **42.** The servicing and/ or replacement of the fluidconnector **40** may be performed through the extraction of only the fluidconnector **40.** The compartment **44** may have a treaded portion to rigidly mount the fluidconnector **40.**

The body portion **43** of fluidconnector sleeve **42** may include a conduit **47** extending from the compartment **44** and along the direction of the central axis of the body portion **43.** The conduit **47** may extend to the end of the body portion **43** opposite the inlet **45.** The conduit **47** may have an opening at the end of the body portion **43** opposite the inlet **45.** The compartment **44** and the conduit **47** may form a continuos passage through the body portion **43.** In the first connector member **14,** having the fluidconnector **40** inserted into the fluidconnector sleeve **42,** a fluid channel in the fluidconnector **40** may be contiguous with the conduit **47** to form a continuos fluid passage through the first connector member **14.**

The fluidconnector sleeve **42** may comprise a flange portion **46** at the end opposite inlet **45.** The flange portion **46** may extend in a direction substantially transverse to the central axis of the body portion **43** away from the conduit **47.** In an embodiment, the flange portion **46** may be formed as a continuous ring around the body portion **43.** In an alternative embodiment, the flange portion **46** may be formed as a discontinuous ring around the body portion **43.**

The flange portion **46** may have an abutment seat **48** formed at a side thereof. The abutment seat **48** may be configured to engage the cartridge **18.**

The body portion **43** and flange portion **46** may have a thrust surface **49** at the end opposite inlet **45.** The thrust surface **49** may be opposite and parallel to the abutment seat **48.** The thrust surface **49** may be transverse to the central axis of the body portion **43.** The conduit **47** of body portion **43** may have an opening at thrust surface **49.** The inner perimeter of the thrust surface **49** may delimit the opening of conduit **47.** The thrust surface **49** may be configured to engage a surface of the piston member **16.**

The body portion **43** may have a bevelled edge **50** at the end provided with the inlet **45.** The bevelled edge **50** may be inclined toward the central axis of the body portion **43.** The bevelled edge **50** may form a ring around the body portion **43** adjacent the inlet **45.**

In an embodiment, the body portion **43** may comprise a slot **51.** The slot **51** may be cut into the thrust surface **49** of body portion **43.** The slot **51** may be positioned at thrust surface **49** such that a side has an opening at thrust surface **49.** The slot **51** may be concentric with conduit **47** and may be disposed at any position along the thrust surface **49** which may engage piston member **16.** In an embodiment, the slot **51** may be positioned adjacent the inner perimeter of the thrust surface **49** which may delimit the opening of conduit **47.**

In an embodiment, the fluidconnector **40** and the fluidconnector sleeve **42** may be integral so that the first connector member **14** may be a monolithic structure. The monolithic first connector member **14** may include the body portion **43.**

In the first fluid coupler **10,** the first connector member **14** may not be mounted or joined to the support member **12.** The first connector member **14** may be free to move within the channel **24** and the abutment chamber **34.**

The first fluid coupler **10** may comprise an alignment gap **52** between the support member **12** and the first connector member **14** for floating movement of the first connector member **14.** The alignment gap **52** may be formed by suitably configuring the body portion **43,** flange **46,** cartridge **18,** mounting plate **32,** channel **24** or the abutment chamber **34** or any combination thereof. The dimension and/ or geometry of the body portion **43,** flange **46,** cartridge **18,** mounting plate **32,** channel **24** or the abutment chamber **34** may be suitably adapted to provide for the alignment gap **52.**

The alignment gap **52** may enable a radial movement of the first connector member **14** relative to the support member **12.** First connector member **14** may be radially displaced in a direction transverse to the longitudinal axis of the channel **24.** The magnitude of displacement of first connector member **14** may be dependent on the alignment gap **52.** During a radial displacement of first connector member **14** the angle between the central axis of the body portion **43** and the longitudinal axis of the channel **24** may remain constant.

The alignment gap **52** may enable a pivotal movement of the first connector member **14** relative to the support member **12.** First connector member **14** may be pivotably displaced at an angle relative to the longitudinal axis of the channel **24.** The magnitude of displacement of first connector member **14** may be dependent on the alignment gap **52.** During a pivotal displacement of first connector member **14** the angle between the central axis of the body portion **43** and the longitudinal axis of the channel **24** may vary.

The alignment gap **52** may enable a combined pivotal and radial movement of the first connector member **14** relative to the support member **12.** First connector member **14** may be displaced at an angle relative to the longitudinal axis of the channel **24** and may be displaced in a direction transverse to the longitudinal axis of the channel **24.** The magnitude of a combined pivotal and radial displacement of first connector member **14** may be dependent on the alignment gap **52.** During a combined pivotal and radial displacement of first connector member **14** the angle between the central axis of the body portion **43** and the longitudinal axis of the channel **24** may vary.

The body portion **43** of the fluidconnector sleeve **42** may be partly accommodated in the channel **24** and partly in the abutment chamber **34** of the mounting plate **32.** The movement of the body portion **43** in the support member 12 may be restricted by the enclosing wall of the channel **24.**

The flange portion **46** may be accommodated in the abutment chamber **34.** The movement of the flange portion **46** in the support member **12** may be restricted by the abutment edge **28** of the cartridge **18** and the enclosing wall of the abutment chamber **34** and the abutment ledge **37.**

In the first fluid coupler **10,** the bevelled edge **50** of the body portion **43** and the inclined edge **26** of the channel **24** may have an angular spacing of about 20° - 30°.

The piston member **16** may comprise a piston conduit **53.** The piston conduit **53** may form a through fluid passage and may be centrally positioned in the piston member **16.** The piston conduit **53** may have an opening at a piston thrust surface **54** and an opening at a piston surface **55.** The piston thrust surface **54** and the piston surface **55** may be mutually opposite and parallel. Between and substantially perpendicular to the piston thrust surface **54** and the piston surface **55** may be a piston guide **56.**

The piston guide **56** may have a piston inclined edge **57** adjacent to the piston surface **55.** The piston inclined edge **57** may be formed as a ring around the piston member **16.**

In an embodiment, the piston guide **56** may have a further inclined edge adjacent to the piston thrust surface **54.** This further inclined edge may be formed as a ring around the piston member **16.**

In an embodiment, the piston guide **56** may comprise a piston groove **58.** The piston groove **58** may be cut into the piston guide **56.** The piston groove **58** may be positioned at the piston guide **56** such that a side has an opening piston guide **56.** The piston groove **58** may be disposed at any position along the piston guide **56** which may engage guide **38.**

In the first fluid coupler **10,** the piston member **16** may be mounted in the support member **12,** within the enclosing wall of the fluid chamber **36** of the mounting plate **32.** The piston member **16** may be slidably engaged to the enclosing wall of the fluid chamber **36** and may move in an axial direction parallel to the longitudinal axis of the cavity in the mounting plate **32.** The guide **38** may engage to the piston guide **56.**

The guide **38** and the piston guide **56** may be configured to enable the piston member **16** to axially slide in the mounting plate 32. The dimension and/ or geometry of the guide **38** and the piston guide **56** may be suitably adapted to allow piston member **16** to axially slide in the mounting plate **32.**

In the first fluid coupler **10,** the piston member **16** may be positioned between the thrust surface **49** of the first fluidconnector member **14** and the fluid chamber ledge **39.** The axial movement of the piston member **16** may be restricted. In a direction, the piston member **16** may be restricted by the fluid chamber ledge **39** contacting the piston surface **55.** In the opposite direction, the piston member **16** may be restricted by piston thrust surface **54** contacting the thrust surface **49** of the first fluid connector **14** when the abutment seat **48** abuts the abutment edge **28** of the cartridge **18.**

In an embodiment, the piston member **16** may also be pivotable relative to the mounting plate **32.** The guide **38** and the piston guide **56** may be configured to enable the piston member **16** to pivot in the mounting plate **32.** The dimension and/ or geometry of the guide **38** and the piston guide **56** may be suitably adapted to allow piston member **16** to pivot in the mounting plate **32.**

In the first fluid coupler **10,** the piston member **16** may be actuatable under fluid pressure to slide axially in the guide **38** toward first connector member **14.** The piston member **16** may push the first connector member **14** into abutting engagement with the cartridge **18** of the support member **12.**

The piston member **16** may eliminate the need to connect a fluid hose directly to the first connector member **14** thereby eliminating any reaction forces that may be introduced by the fluid hoses.

In the first fluid coupler **10,** the fluid passage **35,** conduit **47** and the piston conduit **53** may have the same diameters.

The first fluid coupler **10** may comprise a compressible element **60** positioned in the groove **30.** The compressible element **60** may be positioned between the cartridge **18** of the support member **12** and the body portion **43** of the first connector member **14.** The compressible element **60** may be a flexible ring. The compressible element **60** may be made from a compressive material such as nitrile rubber or polyurethane.

In an embodiment, the first fluid coupler **10** may comprise a plurality of compressible elements **60** positioned in a plurality of grooves **30.**

The compressible element **60** may return the first connector member **14** to a neutral position after disengagement from a second connector member. The compressible element **60** may return the first connector member **14** to the neutral position after disengagement of the fluidconnector **40** and a corresponding fluidconnector. The neutral position of first connector member **14** may be the position prior to engagement of the fluidconnector **40** and a corresponding fluidconnector.

The first fluid coupler **10** may comprise a thrust seal **62** positioned in the slot **51.** The compression of the thrust seal **62** may be positioned between the body portion **43** of the first connector member **14** and the piston thrust surface **54.** A movement of piston thrust surface **54** against the thrust surface **49** of the first connector member **14** may compress the thrust seal **62.** The thrust seal **62** may ensure that a fluid does not leak from between the piston member **16** and the first connector member **14** into the abutment chamber **34.** In an embodiment, the thrust seal **62** may be an O-ring.

The first fluid coupler **10** may comprise a piston seal **64** positioned in the piston groove **58.** The piston seal **64** may be positioned between the guide **38** and the piston member **16.** The piston seal **64** may ensure that a fluid does not leak from between the piston member **16** and the guide **38** into the abutment chamber **34.**

In an embodiment, the piston seal **64** may also be configured to allow a pivotal movement of the piston member **16.**

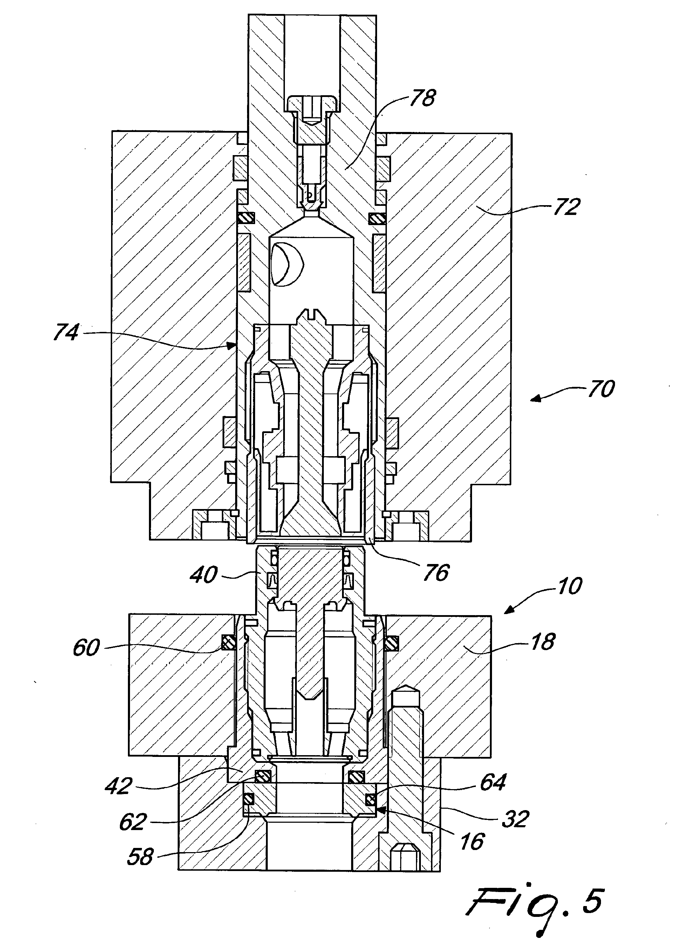

Fig. 5 illustrates the first fluid coupler **10** aligned to the second fluid coupler **70.** The second fluid coupler **70** may comprise a corresponding cartridge **72** and the second fluidconnector member **74.** The second fluidconnector member **74** may comprise a corresponding fluidconnector **76** and a sliding sleeve **78.**

Fluidconnector **40** may be suitably formed to engage with the corresponding fluidconnector **76.** The fluidconnector **40** and the corresponding fluidconnector **76** may be configured for detachable reciprocal engagement. The engagement surfaces of the fluidconnector **40** and corresponding fluidconnector **76** may be formed to allow efficient engagement and disengagement in a direction substantially parallel to the longitudinal axes of the fluidconnector **40** and corresponding fluidconnector **76.** In an embodiment, the fluidconnector **40** may be a male fluidconnector while corresponding fluidconnector **76** may be a female fluidconnector. In an alternative embodiment, the fluidconnector **40** may be a female fluidconnector while corresponding fluidconnector **76** may be a male fluidconnector.

The skilled person would realise that foregoing embodiments may be modified to obtain the fluid coupler **10** of the present disclosure.

### Industrial Applicability

This disclosure describes a process for aligning male and female fluidconnectors for reciprocal engagement. The process may align hydraulic fluidconnectors with high accuracy during engagement. The process may allow alignment of fluidconnectors in order to establish a reliable and leak free connection.

Depending on the misalignment of the fluidconnectors, the first connector member **14** carrying a fluidconnector **40** may be radially displaced in any direction and/or pivotably displaced. This may allow the fluidconnector **40** and the corresponding fluidconnector **76** to engage smoothly so as to reduced potential wear.

During engagement and disengagement, the first connector member **14** may be separated from the hydraulic hose entry ports as the fluid circuit is depressurized.

Accordingly, this disclosure includes all modifications and equivalents of the subject matter recited in the claims appended hereto as permitted by applicable law.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A process of aligning fluid connectors (40, 76), comprising the steps of:
aligning a first fluid coupler (10) supporting a first connector member (14) to a second fluid coupler (70) supporting a second connector member (74);
moving the second connector member (74) towards the first connector member (14) after the engagement of a guiding pin (80) provided on the first fluid coupler (10) and a guiding bushing (82) provided on the second fluid coupler (70);
engaging the first connector member (14) to the second connector member (74) to connect the fluid connectors (40, 76) wherein the first connector member (14) is displaceable relative to the second connector member (74), and **characterised by** the steps of
pivotally displacing a piston member (16) at engagement of the first connector member (14) to the second connector member (74), the piston member (16) disposed in a support member (12) provided in the fluid coupler (10) and
pressurizing a fluid circuit to axially slide the piston member (16).

2. The method of claim 1 comprising the step of radially displacing the first connector member (14) at engagement of the first connector member (14) to the second connector member (74).

3. The method of claim 1 comprising the step of pivotably displacing the first connector member (14) at engagement of the first connector member (14) to the second connector member (74).

4. The method of claim 1 further comprising a step of compressing a thrust seal (62) disposed between the piston member (16) and the first connector member (14) when the piston member (16) pushes against the first connector member (14).

5. The method of any one of the preceding claims comprising the step of locking the fluid coupler (10) in a position relative to a position of the second fluid coupler (70) prior to the engagement of the guiding pin (80) and the guiding bushing (82).

6. The method of any one of the preceding claims wherein the step of aligning the first fluid coupler (10) to the second fluid coupler (70) involves rotating the second fluid coupler (70) relative to the first fluid coupler (10).

7. The method of claim 5 wherein the step of locking the relative positions of the the fluid coupler (10) and the second fluid coupler (70) comprises locking a mounting bracket supporting the first fluid coupler (10) to a quickcoupler supporting the second fluid coupler (70).

8. The method of claim 6 wherein rotating the second fluid coupler (70) relative to the first fluid coupler (10) comprises rotating a quickcoupler supporting the second fluid coupler (70) relative to a mounting bracket supporting the first fluid coupler (10).

## Patentansprüche

1. Ein Verfahren zur Ausrichtung von Fluidkonnektoren (40, 76), das folgende Schritte umfasst:
Ausrichtung eines ersten Fluidkopplers (10), der ein erstes Konnektorglied (14) trägt, mit einem zweiten Fluidkoppler (70), der ein zweites Konnektorglied (74) trägt;
Bewegung des zweiten Konnektorglieds (74) zum ersten Konnektorglied (14) hin nach Eingriff eines Führungsstifts (80), der am ersten Fluidkoppler (10) angebracht ist, und einer Führungsbuchse (82), die am zweiten Fluidkoppler (70) angebracht ist;
Eingriff des ersten Konnektorglieds (14) in das zweite Konnektorglied (74) zur Verbindung der Fluidkonnektoren (40, 76), wobei das erste Konnektorglied (14) im Verhältnis zum zweiten Konnektorglied (74) verschiebbar ist, und **gekennzeichnet durch** folgende Schritte:
drehgelenkige Verschiebung eines Kolbenglieds (16) beim Eingriff des ersten Konnektorglieds (14) in das zweite Konnektorglied (74), wobei das Kolbenglied (16) in einem im Fluidkoppler (10) bereitgestellten tragenden Glied (12) angebracht ist, und
Unter-Druck-Setzen eines Fluidkreislaufs, um das Kolbenglied (16) axial zu verschieben.

2. Das Verfahren gemäß Anspruch 1, das den Schritt der radialen Verschiebung des ersten Konnektorglieds (14) beim Eingriff des ersten Konnektorglieds (14) in das zweite Konnektorglied (74) umfasst.

3. Das Verfahren gemäß Anspruch 1, das den Schritt der drehbaren Verschiebung des ersten Konnektorglieds (14) beim Eingriff des ersten Konnektorglieds (14) in das zweite Konnektorglied (74) umfasst.

4. Das Verfahren gemäß Anspruch 1, das weiter einen Schritt des Zusammendrückens einer zwischen dem Kolbenglied (16) und dem ersten Konnektorglied (14) angebrachten Druckdichtung (62), wenn das Kolbenglied (16) gegen das erste Konnektorglied (14) drückt, umfasst.

5. Das Verfahren gemäß einem beliebigen der obigen Ansprüche, das folgenden Schritt umfasst: Blockieren des Fluidkopplers (10) in einer Position relativ zu einer Position des zweiten Fluidkopplers (70) vor dem Eingriff des Führungsstifts (80) und der Führungsbuchse (82).

6. Das Verfahren gemäß einem beliebigen der obigen Ansprüche, worin der Schritt der Ausrichtung des ersten Fluidkopplers (10) mit dem zweiten Fluidkoppler (70) das Drehen des zweiten Fluidkopplers (70) relativ zum ersten Fluidkoppler (10) beinhaltet.

7. Das Verfahren gemäß Anspruch 5, worin der Schritt des Blockierens der relativen Positionen des Fluidkopplers (10) und des zweiten Fluidkopplers (70) die Befestigung eines Befestigungsbügels, der den ersten Fluidkoppler (10) trägt, mit einem Schnellverbinder, der den zweiten Fluidkoppler (70) trägt, umfasst.

8. Das Verfahren gemäß Anspruch 6, worin das Drehen des zweiten Fluidkopplers (70) relativ zum ersten Fluidkoppler (10) das Drehen eines Schnellverbinders, der den zweiten Fluidkoppler (70) trägt, relativ zu einem Befestigungsbügel, der den ersten Fluidkoppler (10) trägt, umfasst.

## Revendications

1. Procédé d'alignement de connecteurs de fluides (40, 76), comprenant les étapes suivantes :
aligner un premier coupleur de fluide (10) supportant un premier élément de connecteur (14) avec un deuxième coupleur de fluide (70) supportant un deuxième élément de connecteur (74) ;
déplacer le deuxième élément de connecteur (74) vers le premier élément de connecteur (14) après la mise en prise d'un ergot de guidage (80) placé sur le premier coupleur de fluide (10) et d'une douille de guidage (82) placée sur le deuxième coupleur de fluide (70) ;
mettre en prise le premier élément de connecteur (14) avec le deuxième élément de connecteur (74) pour connecter les connecteurs de fluides (40, 76), le premier élément de connecteur (14) pouvant être déplacé par rapport au deuxième élément de connecteur (74), et **caractérisé par** les étapes suivantes :
déplacer de façon pivotante un élément de piston (16) à la mise en prise du premier élément de connecteur (14) avec le deuxième élément de connecteur (74), l'élément de piston (16) étant disposé dans un élément de support (12) placé dans le coupleur de fluide (10) et
mettre sous pression un circuit de fluide pour faire glisser axialement l'élément de piston (16).

2. Procédé selon la revendication 1, comprenant l'étape consistant à déplacer radialement le premier élément de connecteur (14) à la mise en prise du premier élément de connecteur (14) avec le deuxième élément de connecteur (74).

3. Procédé selon la revendication 1, comprenant l'étape consistant à déplacer de façon pivotante le premier élément de connecteur (14) à la mise en prise du premier élément de connecteur (14) avec le deuxième élément de connecteur (74).

4. Procédé selon la revendication 1, comprenant en outre une étape consistant à comprimer un joint de butée (62) placé entre l'élément de piston (16) et le premier élément de connecteur (14) quand l'élément de piston (16) exerce une pression sur le premier élément de connecteur (14).

5. Procédé selon l'une quelconque des revendications précédentes, comprenant l'étape consistant à bloquer le coupleur de fluide (10) dans une position par rapport à une position du deuxième coupleur de fluide (70) avant la mise en prise de l'ergot de guidage (80) et de la douille de guidage (82).

6. Procédé selon l'une quelconque des revendications précédentes, dans lequel l'étape d'alignement du premier coupleur de fluide (10) avec le deuxième coupleur de fluide (70) implique le fait de faire tourner le deuxième coupleur de fluide (70) par rapport au premier coupleur de fluide (10).

7. Procédé selon la revendication 5, dans lequel l'étape de blocage des positions relatives du premier coupleur de fluide (10) et du deuxième coupleur de fluide (70) comprend le blocage d'un support de montage qui supporte le premier coupleur de fluide (10) sur un raccord rapide qui supporte le deuxième coupleur de fluide (70).

8. Procédé selon la revendication 6, dans lequel la rotation du deuxième coupleur de fluide (70) par rapport au premier coupleur de fluide (10) comprend la rotation d'un raccord rapide qui supporte le deuxième coupleur de fluide (70) par rapport à un support de montage qui supporte le premier coupleur de fluide (10).
